# NEUE EUROPÄISCHE PATENTSCHRIFT

(11) **EP 2 857 792 B2**
(45) Veröffentlichungstag und Bekanntmachung des Hinweises auf die Entscheidung über den Einspruch: **23.09.2020**
(45) Hinweis auf die Patenterteilung: 06.12.2017
(21) Anmeldenummer: 14003386.1
(22) Anmeldetag: 01.10.2014
(51) Int. Cl.: F41H 13/00

(54) **Luftgestütztes Laserwaffensystem**
Airborne laser weapon system
système d'arme laser aérien

(30) Priorität: 05.10.2013 DE 102013016646
(43) Veröffentlichungstag der Anmeldung: 08.04.2015
(73) Patentinhaber: MBDA Deutschland GmbH, 86529 Schrobenhausen (DE)
(72) Erfinder: Hagen, Thomas, D-85296 Rohrbach/Ilm (DE); Geidek, Franz, D-86561 Aresing (DE)
(74) Vertreter: Isarpatent

(56) Entgegenhaltungen:
- EP-A2- 0 980 123
- EP-A2- 2 693 161
- EP-B1- 1 730 822
- WO-A2-2006/103655
- WO-A2-2006/103655
- DE-A1-102007 049 436
- US-A- 5 208 699
- US-A1- 2004 075 884
- US-A1- 2004 075 884
- US-A1- 2007 008 514
- US-B2- 7 688 247

## Beschreibung

Die vorliegende Erfindung betrifft Waffentechnologie. Insbesondere betrifft die vorliegende Erfindung ein luftgestütztes Laserwaffensystem. Weiter insbesondere finden dabei über Lichtwellenleiter gepumpte Laser Verwendung.

US 2004/075884 A1 offenbart ein System zur Ausrichtung elektromagnetischer Energie umfassend ein erstes Untersystem, welches auf einer ersten Plattform angeordnet ist zum Empfang eines Laserstrahls, zum Verstärken des Laserstrahls zur Bildung eines verstärkten Strahles und zur Übertragung des verstärkten Strahles über ein Medium; und ein zweites Untersystem, welches auf einer zweiten Plattform angeordnet ist zum Neuausrichten des verstärkten Strahles, wobei die zweite Plattform relativ zu der ersten Plattform beweglich ist.

Die Durchführung von Tätigkeiten im Bereich der luftgestützten Aufklärung oder Kriegsführung, speziell in großer Entfernung von einer eigenen Basis, in großer Höhe oder über längere Zeiträume stellt für den Menschen trotz der Fortschritte im Bau von Luftfahrzeugen eine Herausforderung, eine Unbequemlichkeit wegen der damit verbundenen physischen Einschränkungen und auch eine große Gefahr dar. Dies gilt insbesondere dann, wenn die Tätigkeit selbst mit weiteren Gefahren verbunden ist, z.B. weil sie in Arealen stattfindet, die einer Gefährdung durch den Gegner unterliegen ("Flugabwehr"), bis hin zu dem Extrem eines Flugkörperwaffensystems, welche die Aufgabe hat, einen Sprengkopf zu einem Ziel zu verbringen und sich im Zuge der Mission selbst zu zerstören. Es versteht sich, dass die Bereitschaft von Menschen zur Durchführung solcher Aufgaben gewissen Beschränkungen unterliegt.

Vor diesem Hintergrund wird schon seit längerem daran gearbeitet, sogenannte unbemannte Luftfahrzeuge zu schaffen, welche solche Aufgaben teilweise autonom, teilweise ferngesteuert von einer Basisstation bzw. einem Träger, auf jeden Fall aber ohne Besatzung, wahrnehmen sollen.

Bekannt sind solche unbemannten Luftfahrzeuge (UAV) heute in mehreren Ausprägungen. So gibt es UAVs zur Erkundung, d.h. der Hauptzweck eines solchen Fahrzeuges liegt in der Erfassung der Situation/Umwelt, welche z.B. aufgrund von schlechter Sicht oder mangelhaftem Lagebild nicht oder erschwert aus der Entfernung möglich ist. Bekannt sind auch UAVs zur Bekämpfung, d.h. der Hauptzweck eines solchen Fahrzeuges liegt in der Vernichtung eines Objektes durch Ausbringung/Anwendung eines oder mehrerer auf einem Luftfahrzeug mitgeführten Waffensystemen. Weiterhin stellen auch (Lenk-)Flugkörper eine spezielle Ausprägung von UAVs dar, wobei auch Mischformen der genannten Ausprägungen bekannt sind.

Trotz weitgehender Automatisierung solcher UAV durch Fortschritte in Sensorik, Signalverarbeitung und der auf Algorithmen gestützten Entscheidungsfindung mögen nach wie vor eine große Anzahl von Aufgaben denkbar sein, bei denen auf die menschliche Urteilsfähigkeit nicht verzichtet werden kann und soll. Da eine Besatzung, welche eine solche Aufgabe übernehmen kann, auf einem UAV nicht vorhanden ist, kann diese nur von Bedienern, welche sich z.B. auf dem Träger, auf jeden Fall aber an anderer Stelle aufhalten, übernommen werden. Um solchen Bedienern eine Entscheidungsfindung und eine Einflussnahme auf das Geschehen zu ermöglichen, ist der Austausch von Daten zwischen dem Luftfahrzeug und der zu dessen Kontrolle vorhandenen Bedieneinheit notwendig. Hierbei handelt es sich regelmäßig um am Ort des Fahrzeugs/vom Fahrzeug aus erfasste Sensordaten, welche den Bedienern eine Zustands- und Lagebeurteilung ermöglichen sollen, sowie um Steuerdaten, welche den Bedienern eine Kontrolle über das aktuelle bzw. zukünftige Verhalten des UAV ermöglichen sollen, im einfachsten Fall eine Lenkung, d.h. eine Einflussnahme auf die Bewegungsrichtung im Raum.

Für den Datenaustausch sind verschiedene Technologien denkbar, z.B. über sich in der Atmosphäre ausbreitende elektromagnetische Funk- bzw. Radiowellen im Dekameter- bis Dezimeter-Wellenlängenbereich. Diese mögen jedoch detektierbar und insbesondere störbar/störanfällig sein, eine begrenzte Reichweite und/oder eine begrenzte Datenrate aufweisen. Weiterhin denkbar sind elektromagnetische Wellen im Dezimeter- bis Millimeter-Wellenlängenbereich, welche darüber hinaus nur bei Sichtverbindung zwischen Sender und Empfänger realisierbar sind. Weiterhin denkbar ist sich in der Atmosphäre ausbreitendes (Laser-)Licht, das im Wesentlichen den gleichen Einschränkungen unterliegt wie bzgl. der elektromagnetischen Wellen ausgeführt. Auch denkbar sind durch Leitungen übertragene elektrische Signale, für welche zusätzlich ein Risiko wg. leitfähiger Verbindung, z.B. durch Hochspannungsmasten, bestehen mag. Besonders bevorzugt im Rahmen der vorliegenden Erfindung sind durch Lichtwellenleiter übertragene optische Signale ("fasergelenkt"), welche eine in gewissem Umfang begrenzte Reichweite, die allerdings größer sein mag als bei elektrischen Leitungen, aufweisen mag. Hierbei kann der Datenaustausch über Lichtwellenleiter ein brauchbarer Kompromiss sein, so dass insbesondere luftgestützte Waffensysteme mit solchen Datenübertragungssystemen ausgestattet werden können. Insbesondere ist auch möglich, dass eine mit hoher Geschwindigkeit fliegenden, luftgestützten Plattform, z.B. ein Lenkflugkörper, einen Lichtwellenleiter über große Distanzen, z.B. viele 10 km, nachzuschleppen kann, ohne dass dieser dabei abreißt oder die Übertragung zusammenbricht.

Weiter denkbar ist im Bereich der Lichtwellenleiter (LWL), insbesondere bei Lichtwellenleitern mit geringer Dämpfung, einerseits große Datenmengen zuverlässig im Duplexverfahren über viele km zu übertragen, die sogenannte optische Telekommunikation, gleichzeitig aber auch hohe optische Strahlungsleistungen im Multi-kW-Bereich von einer optischen Quelle zu einem abgesetzt von dieser angeordneten Stelle zu übertragen.

Bisher bekannt sind derartige Anwendungen solcher Hochleistungslichtwellenleiter im Bereich von fasergeführten Materialbearbeitungsanlagen, wobei übliche Übertragungswege im Bereich von einigen Metern liegen. Der begrenzende Faktor für diese Übertragungswege liegt - neben der Anwendungsanforderung - im Bereich der für die beabsichtigte Anwendung negativen Veränderung der Strahleigenschaften, z.B. durch Modenmischung, Dispersion und nichtlineare optische Effekte.

Demgemäß wird ein Laserwaffensystem gemäß dem unabhängigen Anspruch 1 angezeigt. Bevorzugte Ausgestaltungen ergeben sich aus den abhängigen Ansprüchen.

Erfindungsgemäß wird vorgeschlagen, eine Trennung des Laserwaffensystems in einen statischen, auf einem am Boden befindlichen Träger (nebst Nebenaggregaten) und einen beweglichen, auf einer luftgestützten Plattform angeordneten Teil (Strahlsender) vorzusehen, wobei im statischen Teil bevorzugt im Wesentlichen alle masse- und volumenbehafteten Elemente angeordnet werden, um den beweglichen, dem Ziel nachgeführten Teil so leicht und agil wie möglich zu gestalten. Die vorliegende Erfindung betrifft somit einen Aufbau für ein luftgestütztes Laserwaffensystem auf der Grundlage von über Lichtwellenleiter gepumpten Lasern.

Hierbei ist der Aufbau derart ausgebildet, dass ein System entsteht, bei welchem der letztendlich auf ein Ziel gerichtete Ausgangsstrahl im vollen umgebenden Halbraum oder zumindest großen Teilen davon richtbar ist, wobei die Leistungsübertragung zwischen den Elementen, in welchen die Energiewandlung von einer anderen Energieform in optische Strahlungsenergie und dem abschließenden, optomechanischen, für die Strahlrichtung auf das Ziel verantwortlichen Element über faseroptische Elemente erfolgt. Insbesondere erfolgt die Übertragung der optischen Energie zur luftgestützten Plattform nicht über eine Freistrahlführung.

Dies mag dadurch realisiert werden, dass die Strahlquelle dergestalt funktonal geteilt wird, dass unter Berücksichtigung von Volumen und Masse eine Trennung der Komponenten der Strahlquellen erfolgt in solche, die die Modenqualität bzw. Strahldivergenz, die spektralen Eigenschaften, bzw. die optische Leistung maßgeblich mitbestimmen.

Insbesondere mag eine die Ausgangs-Strahlqualität maßgeblich bestimmende, aber nur für einen Bruchteil des Gesamtvolumens und der Gesamtmasse einer Strahlquelle verantwortliche Ausgangsstufe unmittelbar an eine Strahlrichteinheit angekoppelt und auf der luftgestützten Plattform vorhanden sein, während weiterhin diese über faseroptische Elemente mit optischer Strahlungsleistung versorgt wird, die in den, zusammen mit den zugehörigen Nebenaggregaten wie Energieversorgung, Kühlung, etc., für den Großteil des Gesamtvolumens und der Gesamtmasse einer Strahlquelle maßgeblichen Pumpquellen erzeugt wird, wobei dieser zweite Anteil in einem bodenfesten Teil des Systems angeordnet und die Übertragung der Leistung und optischen Signalen zwischen diesen beiden Anteilen über faseroptische Elemente erfolgen mag.

Hierdurch mag erreicht werden, dass ein taktisches, luftgestütztes Laserwaffensystem mit relativ kleinen Abmessungen, langer Durchhaltefähigkeit und geringen Kosten zur Verfügung steht, ohne in dessen Beweglichkeit und Reichweite wesentlich eingeschränkt zu sein, ohne die Vorteile einer faseroptischen Leistungsübertragung, gegenüber einer Freistrahlübertragung, wie Robustheit, Sicherheit, Justageunabhängigkeit, Unempfindlichkeit gegen schädliche Umwelteinflüsse, flexible geometrische Gestaltung und geringes Volumen und Masse, etc. aufgeben zu müssen, und ohne wesentliche Abstriche bei der Modenqualität bzw. Strahldivergenz, den spektralen Eigenschaften oder der optischen Leistung und damit letztendlich der auf einem Ziel verfügbaren spektralen Bestrahlungsstärke und damit letztlich der erzielbaren Wirkung machen zu müssen. Weiter wird so die Betriebszuverlässigkeit gesteigert.

Erfindungsgemäß erfolgt die Versorgung des Strahlsenders mit Strahlungsenergie, d.h. deren Übertragung von einem bodengestützten Träger zu der luftgestützten Plattform mittels eines nachgeschleppten Lichtwellenleiters. Dabei ist es möglich, optische Strahlungsleistungen im hohen Multi-kW-Bereich über große Entfernungen von mehrere Kilometern zu übertragen. Beim sogenannten "laser drilling" mag zum Bohren im Gestein, z.B. bei der Öl- und Gasprospektion, die Strahlung eines Lasers dazu benutzt werden, das auszubohrende Gestein stark zu erwärmen, die mechanische Festigkeit herabzusetzen und das anschließende Fördern mittels eines Bohrgestänges zu erleichtern. Dabei mag so verfahren werden, dass die Strahlung des Lasers über eine Lichtleitfaser zum Kopf des Bohrgestänges geführt und dort verwendet wird. Hierbei mögen jedoch insbesondere sogenannte Multimode-Laser und Multimode-Lichtwellenleiter Verwendung finden, bei deren Einsatz die Brillanz und die Strahlqualität weitgehend verloren geht.

Im Bereich der Laserquellen, insbesondere im Bereich der elektrisch gepumpten Halbleiterlaser bzw. Diodenlaser, der Festkörper-Laserquellen bzw. Faserlaser und zugehöriger Optik mag es möglich sein, optische Leistungen im Bereich von einigen Kilowatt bis zu 100 kW und mehr mit hohem Wirkungsgrad, z.B. elektrisch/optisch 25% und mehr, zu erzeugen, zu handhaben und zu fokussieren.

Dabei mögen derartige Halbleiter- bzw. Festkörper-Laserquellen höchster Leistung und Wirkungsgrades vorzugsweise im nahen Infrarotbereich (Wellenlänge ca. 800 nm bis ca. 1,5 µm) arbeiten.

Erfindungsgemäß mögen Laserwaffensysteme gegen unterschiedliche Klassen von Zielen, zum Selbstschutz von Plattformen oder für den offensiven Einsatz, auf der Grundlage von Hochenergie-Lasern eingesetzt werden. Hierzu gehören Anwendungen gegen statische Ziele, z.B. Minen, Sperren, Befestigungen und dergleichen, aber auch gegen dynamische Ziele, z.B. im Rahmen der Abwehr der Bedrohung durch fliegende Objekte (RAM - Rocket, Artillery, Mortar), Lenkflugkörper mit und ohne Suchkopf, Drohnen, UAVs, aber auch von Fahrzeugen, Waffensystemen, Radare etc. Zur wirksamen Bekämpfung solcher Ziele mögen optische Strahlungsleistungen, die in den Bereich von 10 - 100 kW und höher reichen, vorgesehen sein. Hierbei liegt es in der Natur einer Bedrohung, dass diese in der Regel ohne Vorwarnung und aus zuvor undefinierter Richtung auftritt und es erforderlich ist, diese in Zeiträumen von Bruchteilen von Sekunden bis zu einigen wenigen Sekunden zu bekämpfen.

Für ein operationelles Laserwaffensystem mag es deshalb erforderlich sein, dieses so zu ausgestalten, dass ein Bekämpfung von Zielen und dementsprechend eine Strahlrichtung der von dem System ausgesandten Laserstrahlung mit hoher räumlicher Dynamik und Präzision erfolgen mag. Typische Werte für anzunehmende Richtgeschwindigkeiten und - beschleunigungen sind z.B. 1 rad/s und 1 rad/s², bei gleichzeitiger abschließender Richtgenauigkeit des ausgesandten Laserstrahls von 5 µrad. Für eine solche Anwendung wird erfindungsgemäß das Vorhandensein großer beweglicher Massen vermieden.

Zur Realisierung einer geeigneten Wirkung eines Strahlenwaffensystem - insbesondere eines Laserwaffensystems, auf ein Objekt bedingt insofern, dass sich dieses Objekt - von einem Standort des die Wirkung entfaltenden Systems gesehen - im Sichtfeld dieses Systems befindet. Diese durch die im Wesentlichen geradlinige Ausbreitung von vorgesehener elektromagnetischer, optischer oder quasioptischer Strahlung bestimmte Voraussetzung führt dazu, dass von einem Standort in Bodennähe eine Wirkung auf ein Objekt, welches sich z.B. hinter einer Geländeerhebung, z.B. einem Berg, Haus oder Fahrzeug, verbirgt, nicht ohne weiteres möglich ist. Unbeachtet der technischen Realisierungsvoraussetzungen, welche mit einem Einsatz von Strahlenwaffen über große Entfernungen wegen des Einflusses der Atmosphäre auf die Strahlung ohnehin verbunden sind, ist weiter auch ein Einsatz auf Ziele, welche sich hinter dem Horizont befinden, nur erschwert möglich.

Erfindungsgemäß wird nunmehr eine Wirkung auf ein Zielobjekt Z nicht direkt ausgehend vom Standort des die Wirkung entfaltenden Systems erreicht, sondern sich einer weiteren Station als Relais bedient. Das Konzept eines solchen Systems ist dabei dergestalt, dass zunächst von einer Basisstation Bein Wirklaserstrahl geeigneter Leistung und sonstiger Strahleigenschaften erzeugt wird, dieser auf eine sich auf einer luftgestützten Plattform befindlichen Relaiseinheit R gerichtet wird und von dieser entweder durch eine passive Umlenkung mittels eines Spiegels auf das Zielobjekt gerichtet wird, oder zunächst von einem Strahlempfänger, z.B. einem Empfängerteleskop, aufgenommen, fokussiert, modenbereinigtwird, um dann, nach geeigneter Richtungsänderung von einem Strahlsender, z.B. Sendeteleskop auf das Zielobjekt gerichtet zu werden. In beiden Fällen mag es erforderlich sein, dass sich die Relaisstation auf der luftgestützten Plattform im Sichtfeld der Basisstation befindet, und sich das Zielobjekt im Sichtfeld der die Relaisstation auf der luftgestützten Plattform befindet.

Beides mag regelmäßig dann gewährleistet sein, wenn die Entfernung zwischen den einzelnen Stationen nicht allzu groß ist und sich die Relaisstation in ausreichender Höhe über der Basislinie zwischen den beiden anderen Punkten B und Z befindet, wobei die Situation mit zunehmender Höhe günstiger wird.

Allerdings wird mit großer Höhe der insgesamt resultierende Strahlweg auf der Strecke von B nach R nach Z zunehmend größer. Eine geringe Höhe hingegen bedingt, dass der Umlenkwinkel zwischen B nach R und R nach Z sehr flach wird, weshalb eine passive Umlenkung wegen des dann streifenden Einfalls auf den Spiegel ungünstig ist. Weiter ist festzuhalten, dass durch die Installation eines Hochleistungslasers am Boden und die Transmission der erzeugten Laserstrahlung zur Relaisstation über einen oberhalb des Horizontes gerichteten Freistrahl gewisse Sicherheitsrisiken aufwirft. So breitet sich z.B. der Strahl, so er aufgrund eines Fehlers nicht vollständig von der Relaisplattform aufgefangen wird, nahezu unbegrenzt und ohne in der Intensität wesentlich beeinflusst zu werden in der ursprünglichen Richtung weiter fort, durchquert dabei den Luftraum und dringt in den Weltraum vor. Dort mag er den Luftverkehr und auch in Erdnähe befindliche Satelliten gefährden.

Eine andere denkbare Methode, die Bekämpfung eines (Boden-)Zieles aus der Luft durchzuführen, mag darin gesehen werden, das gesamte Lasersystem an Bord einer luftgestützten Plattform zu installieren. z.B. mag ein Hochleistungslaser der 100 kW-Klasse, z.B. ein chemischer Laser - COIL, an Bord eines Transportflugzeuges installiert sein und dessen erzeugte Strahlung über eine aus dem Rumpf des Flugzeuges ragende Strahlrichteinheit auf ein Ziel gerichtet werden.

Unabhängig von der Art der Ausführung des eigentlichen laseraktiven Mediums (als Stab-, Slab-, Faser- oder Scheibenlaser) einer Laserquelle kann ein solches System unter Verwendung eines sogenannten diodengepumpten Lasers, z.B. ausgebildetals Festkörperlaser realisiert werden, wobei auch Flüssigkeits-, Gas- oder Metalldampflaser verwendet werden können, d.h. die Umwandlung der primären Energie in Form elektrischer Energie in Strahlungsenergie zur optischen Anregung des laseraktiven Mediums mag durch eine (große) Anzahl von Halbleiterlaser, Diodenlaser, stattfinden. Auch eine direkte Verwendung der von den Halbleiterlasern ausgesandten Strahlung mag denkbar sein. Hierbei mag der Wirkungsgrad für die Umwandlung elektrischer Energie in Strahlungsenergie zur optischen Anregung einerseits und für die Umwandlung dieser Strahlungsenergie zur optischen Anregung in die optische Ausgangsleistung des Lasersystems andererseits aufgrund physikalischer Gesetzmäßigkeiten unter eins liegen. Regelmäßig können für beide Vorgänge Wirkungsgrade von ca. 50% erreicht, so dass der häufig als Steckdosenwirkungsgrad bezeichnete Gesamtwirkungsgrad der Umwandlung elektrischer Energie in Strahlungsenergie eines Lasers je nach Art der Ausführung im Bereich von 25 - 50% liegt. Hierzu mögen noch zusätzlich optische Verluste bei der Übertragung der Strahlungsenergie sowie elektrische Verluste in Leitungen sowie in üblicherweise zur kontrollierten Steuerung der Halbleiterlaser sowie zur Energiewandlung angewandten elektronischen Schaltungen auftreten.

Erfindungsgemäß sind über diese Pumpelemente und das Lasermedium hinaus für ein funktionsfähiges Laserwaffensystem eine weitere Vielzahl von funktionalen Elementen, wie Stromversorgung, Pufferung, Kühlung, mechanische Struktur, optische Elemente, Sensorik und Aktorik etc. erforderlich.

Die erfindungsgemäße Idee zeichnet sich dadurch aus, dass ein luftgestütztes Laserwaffensystem entsteht, ohne dass dabei die gesamten Laserquellen des Laserwaffensystems oder mindestens deren besonders voluminöse oder massereiche Anteile, wie z.B. Pumpquellen, Energieversorgung und -speicher, Kühlung etc., zusammen mit der Strahlrichteinheit an Bord der luftgestützten Plattform mitgeführt werden müssen. Weiterhin wird unterbunden, dass die verfügbare Betriebsdauer aufgrund des mitgeführten Energievorrates den engen Beschränkungen einer luftgestützten Plattform unterliegt oder eine Notwendigkeit für die Führung eines mit hohen Genauigkeitsforderungen behafteten Freistrahls hoher Leistung durch die Atmosphäre zwischen zwei relativ zueinander und zu einem ortfesten Bezugssystem (Boden) bewegten Objekten (Bodenstation, Relais) besteht, oder in Kauf genommen werden muss, dass durch eine für eine Strahlübertragung der Ausgangsleistung des Lasersystems mit einem nachgeschleppten Faserlichtleiter notwendige Faserlänge die Eigenschaften des Strahls nachteilig beeinflussen. Weiter entfällt natürlich auch das Risiko, das mit einem im freien Luftraum in Richtung auf die Relaisplattform ausgesandten Laserstrahl hoher Leistung verbunden ist. Auch ergibt sich durch die erfindungsgemäße Lösung eine erhöhte Zuverlässigkeit und Einsatzbereitschaft des Gesamtsystems, da durch den Aufbau sich die Anzahl der an Bord der luftgestützten Plattform befindlichen und dort den besonderen Belastungen des Lufttransports unterliegenden Elemente verringert und sich im Wesentlichen auf monolithische Faserelemente beschränkt.

Nachfolgend wird anhand der beigefügten Zeichnungen näher auf Ausführungsbeispiele der Erfindung eingegangen. Es zeigen:
- **Fig. 1**: eine exemplarische Ausgestaltung einer globalen generischen Architektur der funktionalen Komponenten eines Laserwaffensystems;
- **Fig. 2 und 3**: eine exemplarische Ausgestaltung einer Aufteilung der funktionalen Komponenten gemäß der vorliegenden Erfindung; und
- **Fig. 4**: eine exemplarische Ausgestaltung einer Faserlaserarchitektur gemäß der vorliegenden Erfindung.

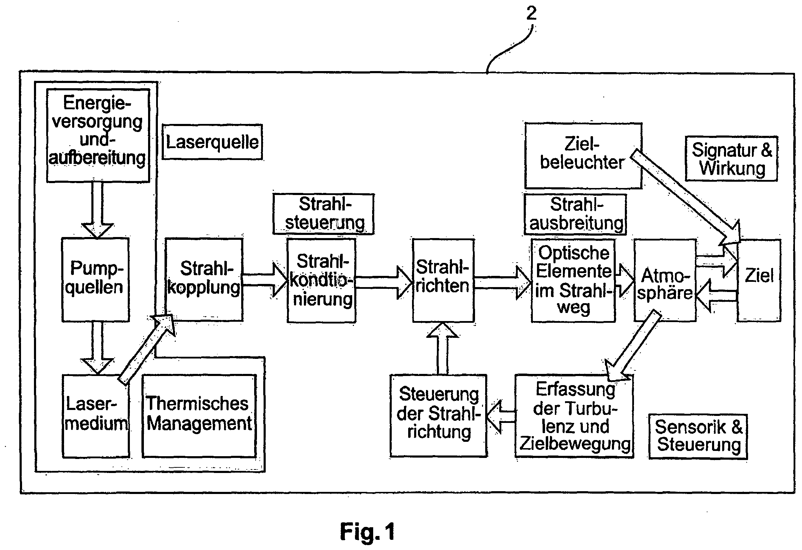

Weiter bezugnehmend auf Fig. 1 wird eine globale generische Architektur der funktionalen Komponenten eines Laserwaffensystems dargestellt.

Eine Energieversorgung und Aufbereitung wirkt hierbei auf die Pumpquellen, welche unter Verwendung des Lasermediums einen Wirkstrahl erzeugen, der nachfolgend in die Strahlsteuerungseinheit eingegeben wird. Die Strahlsteuerungseinheit besteht exemplarisch aus einer Strahl(ein)kopplung mit nachfolgender Strahlkonditionierung sowie Elementen, um eine Ausrichtung des Strahls, beispielsweise auf ein Ziel, zu ermöglichen. Der Wirkstrahl breitet sich danach über mögliche optische Elemente im Strahlweg und regelmäßig durch die Erdatmosphäre in Richtung Ziel aus, welches von einem Zielbeleuchter markiert sein kann. Auf dem Ziel wird eine Wirkung durch den Strahl hervorgerufen. Sensorik und Steuerelektronik können z.B. Turbulenzen der Atmosphäre sowie eine Zielbewegungen erfassen und unter Verwendung einer geeigneten Steuerung den Wirkstrahl nachführen bzw. nachrichten.

Mit dieser Vielzahl an funktionalen Elementen und den zu deren Betrieb erforderlichen Hilfseinrichtungen ergibt sich für das Gesamtsystem eine erhebliche Masse und ein erhebliches Volumen, welche bei einem System der Leistungsklasse 100 kW durchaus mehrere Tonnen betragen kann. In der Literatur wird berichtet, dass Leistungsgewichte von 50 kg/kW absehbar realistisch nicht wesentlich unterschritten werden. Damit ist klar, dass die zur Installation eines solchen Lasersystems geeigneten luftgestützten Plattformen als Träger einer solchen Einrichtung in ihrer minimal möglichen Größe gewissen Beschränkungen unterliegen.

Speziell elektrochemische Energiespeicher bringen einen erheblichen weiteren Bedarf an Platz und an Masse mit sich, welche bei einer vorgegebenen Gesamtmasse und/oder vorgegebenem Bauraum einer möglichen Trägerplattform erhebliche Einschränkungen hinsichtlich einer begrenzten Einsatzdauer ergeben. Weiterhin mag beim Betrieb eines solchen luftgestützten Laserwaffensystems nach Erschöpfung der vorhandenen elektrischen Energiespeicher und Rückkehr zu einer Versorgungsbasis am Ende einer solchen Mission, sofern zutreffend, eine gewisse Zeitspanne erforderlich ist, um dieses, z.B. durch Aufladen oder auch Austausch der Energiespeicher, für den nächsten Einsatz vorzubereiten. Hierdurch wird die Verfügbarkeit eines solchen Systems stark eingeschränkt.

Dabei kann eine Speicherung elektrischer Energie grundsätzlich z.B. mittels Schwungradspeichern, elektrochemischen Akkumulatoren oder auch hochkapazitiven Kondensatoren, sogenannte Supercaps erfolgen. Bei derartigen Systeme werden absehbar bestenfalls gravimetrische Speicherdichten von 100 Wh/kg, entsprechend 360 kJ/kg, bis möglicherweise 500 - 1000 Wh/kg, entsprechend 1800 - 3600 kJ/kg, erreicht. Grundsätzlich ist festzuhalten, dass das Wirken auf ein Ziel mittels Laserstrahlung aus der Luft, im Vergleich zu einem Wirken vom Boden aus, insofern bevorzugt ist, als dadurch der hinderliche Einfluss der Atmosphäre in Form turbulenter Störung oder Streuung an Aerosolen des Strahles verringert wird. Dies liegt u.a. daran, dass der kumulierte Einfluss des ersten Abschnittes des Strahlweges für das Gesamtergebnis überwiegt und sowohl der turbulente Einfluss als auch die Aerosolkonzentration mit zunehmender Höhe rasch geringer wird.

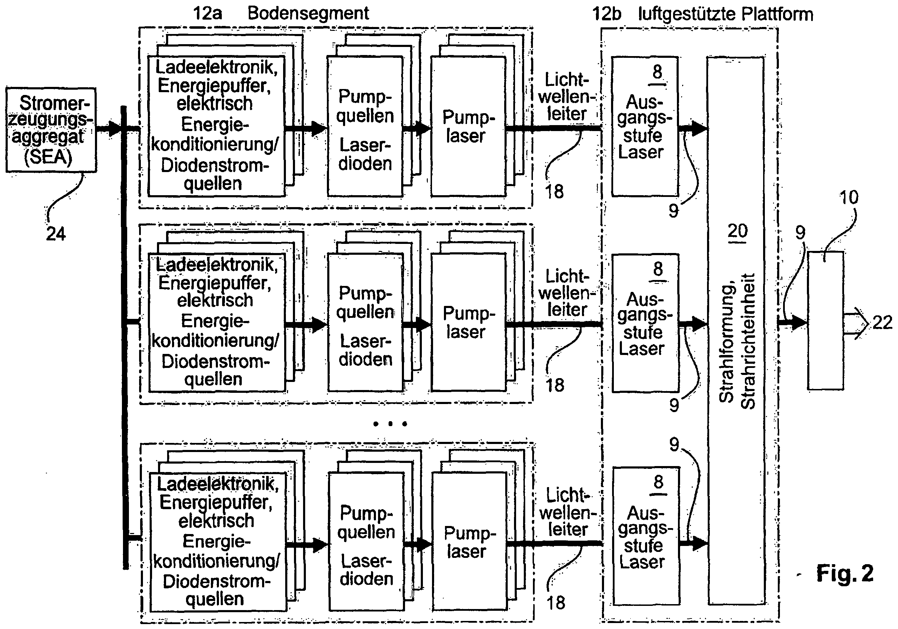

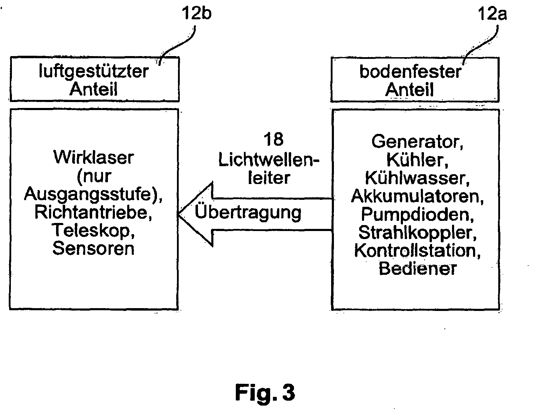

Das Prinzip einer erfindungsgemäßen Aufteilung der funktionalen Komponenten ist in den Figuren 2 und 3 dargestellt.

Figur 2 eine Mehrzahl von exemplarisch zusammengeschlossenen Laserwaffensystemen zur Energieerhöhung. Diese sind an eine gemeinsame Stromversorgung 24 angeschlossen, stellen jedoch ansonsten eigenständige Einheiten dar. Die einzelnen Lasererzeugungseinheiten sind wiederum unter Verwendung von optischen Fasern 18, insbesondere einer einzelnen optischen Faser 18, an Ausgangsstufenelemente 8 angebunden. Diese Gesamtheit der Ausgangsstufenelemente 8 ist dabei auf dem luftgestützten Anteil 12b angeordnet. Jedes der Ausgangsstufenelemente 8 ist unter Verwendung einer optischen Faser 9 oder eines optischen Freistrahls 9 an eine (weitere) Strahlkoppeleinheit 20 angebunden. In der Strahlkoppeleinheit 20 werden nun die einzelnen Strahlanteile der einzelnen Ausgangsstufenelemente 8 kombiniert und über eine optische Faser 9 oder einen weiteren optischen Freistrahl 9 an ein Strahloptikelement 10 zur Aussendung des Wirkstrahls 22 weitergeleitet. Eine Ausgestaltung der Figur 5 stellt hierbei insbesondere ein skalierbares System dar, da eine gewünschte bzw. geforderte Ausgangsleistung durch entsprechende Anpassung der Anzahl der Einzelmodule realisiert werden kann.

Figur 3 zeigt eine exemplarische Aufteilung der Komponenten eines erfindungsgemäßen luftgestützten Laserwaffensystems in den bodenfesten Anteil 12a sowie den luftgestützten Anteil 12b. Insbesondere die vergleichsweise schweren Komponenten des Laserwaffensystems wie Generator, Kühlelemente mit Kühlfluid, Ackumulatoren, Pumpdioden, Strahlkoppler sowie die Kontrollstation eines Bedieners sind im bodenfesten Anteil 12a konzentriert bzw. angeordnet. Die vergleichsweise leichten bzw. letztendlich für die Qualität des Laserstrahls notwenigen Komponenten wie Wirklaserelement(e), insbesondere dessen/deren Ausgansstufe(n), Richtantrieb, Teleskop und hierzu benötigte Sensoren können auf der Luftgestützten Plattform 12b vorgesehen sein und mittels eines vergleichsweise langen, z.B. mehrere Kilometer, Lichtwellenleiters 18 an den bodenfesten Anteil 12a angebunden sein. Der Lichtwellenleiter 18 überträgt dabei Energie einerseits von Bodenplattform 12a zu Luftplattform 12b sowie Kontroll- und Steuerdaten andererseits zwischen Bodenplattform 12a und Luftplattform 12b. Dabei sind bevorzugt diejenigen Komponenten die für die letztendliche Strahlqualität verantwortlich zeichnen auf der Luftplattform 12b vorgesehen.

Allerdings wird die Eignung einer für ein Laserwaffensystem geeigneten Laserquelle letztlich im Wesentlichen durch deren Modenqualität bzw. Strahldivergenz, spektralen Eigenschaften und optische Leistung bestimmt. Aus diesem Grund beträgt in diesem Zusammenhang bei z.B. 10 kW optischer Leistung die frei verfügbare Faserlänge gegenwärtig weniger als 2,5 m. Es erscheint schwierig, mit einer solchen geringen freien Länge ein Konzept zur Strahlübertragung nach dem Konzept eines einer luftgestützten Plattform nachgeschleppten Lichtwellenleiters zu realisieren.

Um die zuvor dargestellten Probleme zu umgehen, wird vorgeschlagen, den Aufbau eines Laserwaffensystems so zu gestalten, dass nur eine Ausgangsstufe, welche am Ende der Verstärkungskette einer Laserquelle steht und abschließend die Modenqualität bzw. Strahldivergenz, spektralen Eigenschaften und optische Leistung der von der Laserquelle abgegebenen Strahlung bestimmt, ggf. ein ebenfalls die Strahleigenschaften bestimmender Oszillator sowie ein zugehöriges Strahlrichtsystem, welches die dergestalt erzeugte Laserstrahlung auf ein Ziel richtet, abgesetzt von den restlichen Komponenten des Laserwaffensystems, speziell von den Diodenpumpquellen, den Hilfsaggregaten und den Energiespeichern, auf der zu diesem Waffensystem gehörigen luftgestützten Plattform angeordnet wird.

Bei einer unbemannten luftgestützten Plattform wird es sich bei dem zugehörigen Träger in der Regel um eine bodengestützte Plattform handeln, sei es eine an Land befindliche oder dort verankerte Plattform oder ein Fahrzeug. Es ist aber natürlich nicht ausgeschlossen, dass es sich bei dem Träger um ein Wasserfahrzeug, Schiff oder ein Unterwasserfahrzeug handelt. Bei der beschriebenen Ausgangsstufe kann es sich dabei insbesondere um einen Faserlaser handeln, wobei die Ausgangsstufe entweder wiederum mit einem Faserausgang kurzer Länge endet oder abschließend bereits ein Freistrahl aus dieser austritt. Es ist aber auch denkbar, dass es sich bei der beschriebenen Ausgangsstufe um eine andere Art von optisch gepumpter Laserquelle handelt, bei welcher das Medium als Stab-, Slab- oder Scheibenlaser oder eine Anzahl oder Kombination solcher Geometrien ausgeprägt ist, wobei in diesem Fall vorzugsweise abschließend ebenfalls ein Freistrahl ausgesandt wird. In allen Fällen wird der eigentliche, für die Wirkung benötigte Strahl hoher Strahlleistung und Strahlqualität erst an Bord der luftgestützten Plattform erzeugt.

Es ist dabei nicht zwangsweise erforderlich, dass die Ausgangsstufe wesentlich zur optischen Ausgangsleistung der Laserquelle beiträgt, also eine Leistungsverstärkung deutlich größer als 1 aufweist. Vielmehr ist auch eine Ausgangsstufe denkbar, welche weitgehend passiv lediglich die während der Übertragung von den vorgelagerten Stufen hervorgerufene/aufgetretene Verschlechterung der Strahleigenschaften hinsichtlich Modenqualität bzw. Strahldivergenz oder der spektralen oder zeitabhängigen Eigenschaften des Strahls kompensiert.

Es sei darauf weiter hingewiesen, dass sich das Konzept nicht zwangsläufig auf die Verwendung einer Strahl- oder Pumpquelle beschränkt, sondern dass dieses auch auf das Prinzip der Strahlkopplung mehrerer Laser- oder Pumpquellen übertragbar ist. In diesem Fall kommen mehrere Ausgangsstufen oder mehrere Pumpquellen zur Anwendung, welche in äquivalenter Weise über (mehrere) Lichtwellenleiter mit der luftgestützten Plattform verbunden sind.

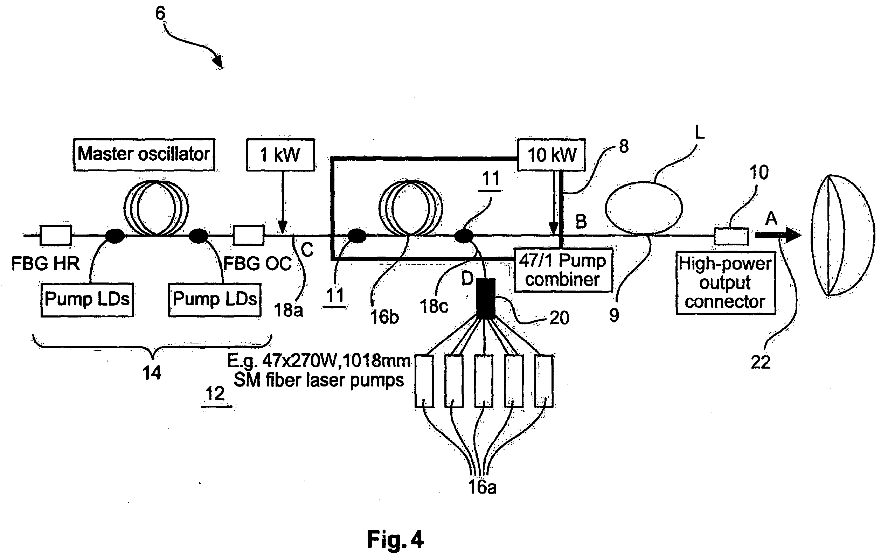

Angewandt auf eine aktuelle Faserlaserarchitektur ist eine exemplarische Ausgestaltung in Fig. 4 dargestellt, die dergestalt aussehen mag, dass die oben bezeichnete Ausgangsstufe aus der gekennzeichneten aktiven Faser besteht, wobei die Schnittstellen aus den mit B, C und D gekennzeichneten Stellen besteht, die sich eben dazu auszeichnen, dass, anders als bei einem klassischen Konzept, bei welchem die Schnittstelle aus der mit A gekennzeichneten Stelle besteht, an diesen nicht gleichzeitig hohe Leistungen und hohe Anforderungen an das Übertragungsverhalten bestehen. Im vorliegenden Fall mag an der Stelle D ein Lichtwellenleiter geeigneter Ausprägung und großer Länge, z.B. viele Kilometer, eingespleißt werden und die Basis mit dem Luftfahrzeug verbinden, um das beabsichtigte Ziel zu erreichen.

Figur 4 zeigt den schematischen Aufbau der Wirkstrahlerzeugung einer erfindungsgemäßen Lasererzeugungseinheit 6. Eine Seedlasereinheit 14, welche im Wesentlichen aus dem Stand der Technik bekannt ist, weist in Figur 4 exemplarisch zwei Pumplaserdioden auf und erzeugt mit der aktiven Faser bzw. dem Master Oszillator einen Laserstrahl mit der Eingangsleistung für den nachgeschalteten Faserverstärker bzw. eine optisch gepumpte Faser 16b. Vor und nach der aktiven Faser der Seedlasereinheit 14 angeordnet sind Faser-Bragg-Gitter als wellenlängenselektiver Faserreflektor der fasergekoppelten Pumplaserdioden.

Seedlasereinheit 14 weist exemplarisch eine Leistung von 1 kW auf und ist unter Verwendung einer optischen Faser 18a an das Ausgangsstufenelement 8 angekoppelt. Pumplasereinheiten 16a sind unter Verwendung von optischen Fasern 18b an eine Strahlkopplereinheit 20 angebunden, die wiederum mit optischer Faser 18c an dem Ausgangsstufenelement 8 angebunden ist. Die Strahlkopplereinheit 20 kann hierbei Teil des Ausgangsstufenelementes 8 sein, oder alternativ zumindest am vollbeweglichen Anteil 12b angeordnet sein. Somit können entweder die optischen Fasern 18a,b oder 18a,c den Übergang zwischen dem stationären/teilbeweglichen Anteil 12a und dem vollbeweglichen Anteil 12b bereitstellen.

Figur 4 zeigt verschiedene Einkoppelpunkte 11 der Pumplasereinheiten 16a bzw. der Strahlkopplereinheit 20 in das Ausgangsstufenelement 8, insbesondere vor und nach der Faserverstärkereinheit 16b.

Der Wirkstrahl in der optischen Faser 18 innerhalb des Ausgangsstufenelementes 8 wird nun unter Verwendung einer optischen Faser 9 oder eines optischen Freistrahls 9 an ein Strahloptikelement 10 weitergegeben, welches den Wirkstrahl 22 gerichtet bzw. gezielt abgeben mag, insbesondere in einem Halbraum, abhängig von der Ausgestaltung des vollbeweglichen Anteils der Strahlrichteinheit 4. Der Wirkstrahl 22 kann somit auf ein Ziel ausgerichtet werden und dort eine geforderte bzw. gewünschte Wirkung erzielen.

Die in der Fig. 4 verwendeten Abkürzungen und Begriffe werden im Folgenden erläutert:
- FBG HR: Fiber Bragg Grating with High-Reflectivity, zu deutsch: Hochreflektierendes Faser-Bragg-Gitter
- FBG OC: Fiber Bragg Grating with Output Coupler, zu deutsch: Teilreflektierendes Faser-Bragg-Gitter als Ausgangskoppler
- Pump LDs: Pump Laser Diodes, zu deutsch: Pump-Laserdioden
- SM Fiber Laser Pumps: Single-Mode Fiber Laser Pumps, zu deutsch: Single-Mode Faserlaser zum Pumpen

Ergänzend sei darauf hingewiesen, dass "aufweisend" oder "umfassend" keine anderen Elemente oder Schritte ausschließt und dass "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Laserwaffensystem
- 6: Lasererzeugungseinheit
- 8: Ausgangsstufenelement
- 9: optische Faser / optischer Freistrahl
- 10: Strahloptikelement
- 12a: bodengebundener Anteil
- 12b: luftgestützter Anteil
- 14: Seedlasereinheit
- 16a: Pumplasereinheit
- 16b: Faserverstärkereinheit
- 18a,b,c: optische Faser
- 20: Strahlkopplereinheit
- 22: Wirkstrahl
- 24: Energieversorgung

## Patentansprüche

1. Laserwaffensystem (2), aufweisend
zumindest eine Lasererzeugungseinheit (6);
zumindest ein Ausgangsstufenelement (8);
ein Strahloptikelement (10); und
einen bodengebundenen Anteil (12a) und luftbasierten Anteil (12b);
wobei der bodengebundene Anteil (12a) ausgebildet ist zumindest zur Energieerzeugung des Laserwaffensystems (2);
wobei der luftbasierte Anteil (12b) zur Zielerfassung des Laserwaffensystems (2) eingerichtet ist;
wobei das Strahloptikelement (10) und das zumindest eine Ausgangsstufenelement (8) am luftbasierten, vollbeweglichen Anteil (12b) angeordnet sind, und
wobei optische Fasern (18) eine Energieübertragung vom bodengebundenen Anteil (12a) zum luftbasierten Anteil (12b) und eine Kommunikationsverbindung zwischen dem bodengebundenen Anteil (12a) und dem luftbasierten Anteil (12b) bereitstellen,
**dadurch gekennzeichnet, dass**
das zumindest eine Ausgangsstufenelement (8) eine Faserverstärkereinheit (16b) aufweist, wobei eine Seedlasereinheit (14) und zumindest eine Pumplasereinheit (16a) unter Verwendung der optischen Fasern (18) an das Ausgangsstufenelement (8) angebunden ist.

2. Laserwaffensystem (2) gemäß Anspruch 1, wobei das zumindest eine Ausgangsstufenelement (8) eingerichtet ist zumindest eine Funktion bereitzustellen aus der Gruppe bestehend aus Verstärkung der optischen Ausgangsleistung, Vergütung des Ausgangsstrahls, Kompensation bzw. Verbesserung von Modenqualität, Strahldivergenz, spektralen und/oder zeitabhängigen Eigenschaften des Ausgangsstrahls.

3. Laserwaffensystem (2) gemäß einem der vorhergehenden Ansprüche, wobei die Lasererzeugungseinheit (6) als Faserlaser ausgebildet ist.

4. Laserwaffensystem (2) gemäß einem der vorhergehenden Ansprüche, wobei die Lasererzeugungseinheit (6) aufweist
zumindest eine Seedlasereinheit (14);
zumindest eine Pumplasereinheit (16a); und/oder
zumindest eine Faserverstärkereinheit (16b);
wobei die Lasererzeugungseinheit (6) unter Verwendung einer optischen Faser (18) an das Ausgangsstufenelement (8) angebunden ist.

5. Laserwaffensystem (2) gemäß Anspruch 1, aufweisend eine Mehrzahl von Pumplasereinheiten (16a);
wobei die Mehrzahl von Pumplasereinheiten (16a) an eine Strahlkopplereinheit (20) angeschlossen sind; und
wobei die Strahlkopplereinheit (20) an das Ausgangsstufenelement (8) angeschlossen ist.

6. Laserwaffensystem (2) gemäß Anspruch 1, aufweisend eine Mehrzahl von Pumplasereinheiten (16a);
wobei die Mehrzahl von Pumplasereinheiten (16a) an das Ausgangsstufenelement (8) angeschlossen ist.
wobei die das Ausgangsstufenelement (8) eine Strahlkopplereinheit (20) aufweist.

7. Laserwaffensystem (2) gemäß einem der vorhergehenden Ansprüche,
wobei das Laserwaffensystem (2) eingerichtet ist einen Wirkstrahl (22) im Wesentlichen in einem Halbraum auszurichten; und /oder
wobei die dynamischen Eigenschaften des luftbasierten, vollbeweglichen Anteils (12b) der Zielerfassung bzw. Zielnachführung des Strahloptikelementes (10) des Laserwaffensystems aufweisen
eine Richtgeschwindigkeit > 0,1 rad/s, insbesondere > 0,5 rad/s, weiter insbesondere > 1 rad/s, weiter insbesondere > 1,5 rad/s, weiter insbesondere 2 rad/s; und/oder
eine Richtbeschleunigung > 0,1 rad/s², insbesondere > 0,5 rad/s², weiter insbesondere > 1 rad/s², weiter insbesondere > 1,5 rad/s², weiter insbesondere 2 rad/s²; und/oder
eine Richtgenauigkeit < 20 µrad, insbesondere < 15 µrad, weiter insbesondere < 10 µrad, weiter insbesondere < 5 µrad, weiter insbesondere < 2 µrad.

8. Laserwaffensystem (2) gemäß einem der vorhergehenden Ansprüche, wobei die Anbindung zwischen Ausgangsstufenelement (8) und Strahloptikelement (10) unter Verwendung einer optischen Faser (9) oder eines optischen Freistrahls (9) erfolgt, wobei die Länge der optischen Faser oder des optischen Freistrahls < 2,5m, insbesondere < 2m, weiter insbesondere < 1,5m, weiter insbesondere <1m, weiter insbesondere <0,5m beträgt.

9. Laserwaffensystem (2) gemäß einem der vorhergehenden Ansprüche 1 bis 8, wobei die optische Faser (18) eine Länge im Bereich von bis zu 8km, insbesondere bis zu 7km, weiter insbesondere bis zu 6km, weiter insbesondere bis zu 5km, weiter insbesondere bis zu 4km, weiter insbesondere bis zu 3km, weiter insbesondere bis zu 2km, weiter insbesondere bis zu 1km aufweist.

## Claims

1. Laser weapon system (2), having
at least one laser generation unit (6);
at least one output stage element (8);
a beam optics element (10); and
a ground-based portion (12a) and air-based portion (12b);
wherein the ground-based portion (12a) is provided at least for the energy generation of the laser weapon system (2);
wherein the air-based portion (12b) is constructed for target detection of the laser weapon system (2);
wherein the beam optics element (10) and the at least one output stage element (8) are arranged on the air-based, fully mobile portion (12b),
and wherein optical fibres (18) provide a transfer of energy from the ground-based portion (12a) to the air-based portion (12b) and a communications link between the ground-based portion (12a) and the air-based portion (12b),
**characterised in that**
the at least one output stage element (8) has a fibre strengthening unit (16b), wherein a seed laser unit (14) and at least one pump laser unit (16a) are connected to the output stage element (8) by using the optical fibres (18).

2. Laser weapon system (2) according to claim 1, wherein the at least one output stage element (8) is constructed to provide at least one function from the group comprising the strengthening of the optical output power, refinement of the output beam, compensation and/or improvement of mode quality, beam divergence, spectral and/or time-related properties of the output beam.

3. Laser weapon system (2) according to any one of the preceding claims, wherein the laser generation unit (6) is provided as a fibre laser.

4. Laser weapon system (2) according to any one of the preceding claims, wherein the laser generation unit (6) has
at least one seed laser unit (14);
at least one pump laser unit (16a); and/or
at least one fibre strengthening unit (16b);
wherein the laser generation unit (6) is connected to the output stage element (8) by using an optical fibre (18).

5. Laser weapon system (2) according to claim 1, having a plurality of pump laser units (16a);
wherein the majority of pump laser units (16a) are connected to a beam coupler unit (20); and
wherein the beam coupler unit (20) is connected to the output stage element (8).

6. Laser weapon system (2) according to claim 1, having a plurality of pump laser units (16a);
wherein said plurality of pump laser units (16a) are connected to the output stage element (8);
wherein the output stage element (8) has a beam coupler unit (20).

7. Laser weapon system (2) according to any one of the preceding claims,
wherein the laser weapon system (2) is established substantially to orient an active beam (22) in a half-space; and/or
wherein the dynamic properties of the air-based, fully mobile portion (12b) of the target detection or target tracking of the beam optics element (10) of the laser weapon system have
a recommended speed of > 0.1 rad/s, in particular > 0.5 rad/s, further in particular > 1 rad/s, further in particular > 1.5 rad/s, further in particular 2 rad/s; and/or
a directional acceleration > 0.1 rad/s², in particular > 0.5 rad/s², further in particular > 1 rad/s², further in particular > 1.5 rad/s², further in particular 2 rad/s²; and/or
a directional accuracy < 20 µrad, in particular < 15 µrad, further in particular < 10 µrad, further in particular < 5 µrad, further in particular < 2 µrad.

8. Laser weapon system (2) according to any one of the preceding claims, wherein the link between the output stage element (8) and the beam optics element (10) is effected with the use of an optical fibre (9) or an optical free beam (9), wherein the length of the optical fibre or optical free beam is < 2.5 m, in particular < 2 m, further in particular < 1.5 m, further in particular < 1 m, further in particular < 0.5 m.

9. Laser weapon system (2) according to any one of the preceding claims 1 to 8, wherein the optical fibre (18) is in the range of up to 8 km in length, in particular up to 7 km, further in particular up to 6 km, further in particular up to 5 km, further in particular up to 4 km, further in particular up to 3 km, further in particular up to 2 km, further in particular up to 1 km.

## Revendications

1. Système d'arme à laser (2) présentant :
au moins une unité de génération de laser (6);
au moins un élément d'étage de sortie (8);
un élément d'optique géométrique (10); et
une partie terrestre (12a) et une partie aérienne (12b);
dans lequel la partie terrestre (12a) est agencée au moins pour la génération d'énergie du système d'arme à laser (2);
dans lequel la partie aérienne (12b) est agencée pour l'acquisition de cible du système d'arme à laser (2);
dans lequel l'élément d'optique géométrique (10) et le au moins un élément d'étage de sortie (8) sont disposés sur la partie aérienne entièrement mobile (12b), et
dans lequel des fibres optique (18) fournissent une transmission d'énergie à partir de la partie terrestre (12a) à la partie aérienne (12b) et une liaison de communication entre la partie terrestre (12a) et la partie aérienne (12b),
**caractérisé en ce**
**que** le au moins un élément d'étage de sortie (8) présente une unité de renforcement de fibre (16b), une unité laser seed (14) et au moins une unité laser de pompage (16a) étant liées à l'élément d'étage de sortie (8) par l'utilisation de les fibres optique (18).

2. Système d'arme à laser (2) selon la revendication 1, dans lequel le au moins un élément d'étage de sortie (8) est agencé pour fournir au moins une fonction choisi parmi le groupe composé du renforcement de la puissance de sortie optique, le traitement antireflet du rayon de sortie, la compensation ou, selon le cas l'amélioration de la qualité du mode, la divergence de rayons, les caractéristiques spectrales et/ou temporelles du rayon de sortie.

3. Système d'arme à laser (2) selon l'une des revendications précédentes, dans lequel l'unité de génération du laser (6) est configurée comme un laser à fibre.

4. Système d'arme à laser (2) selon l'une des revendications précédentes, dans lequel l'unité de génération du laser (6) présente :
au moins une unité laser seed (14);
au moins une unité laser de pompage (16a); et/ou
au moins une unité de renforcement de fibre (16b);
dans lequel l'unité de génération du laser (6) est reliée à l'élément d'étage de sortie (8) par l'utilisation d'une fibre optique (18).

5. Système d'arme à laser (2) selon la revendication 1, présentant :
une pluralité d'unités laser de pompage (16a);
dans lequel la pluralité des unités laser de pompage (16a) est raccordée à une unité de couplage de rayon (20); et
dans lequel l'unité de couplage de rayon (20) est raccordée à l'élément d'étage de sortie (8).

6. Système d'arme à laser (2) selon la revendication 1, présentant :
une pluralité d'unités laser de pompage (16a);
dans lequel la pluralité d'unités laser de pompage (16a) est raccordée à l'élément d'étage de sortie (8);
dans lequel l'élément d'étage de sortie (8) présente une unité de couplage de rayon (20).

7. Système d'arme à laser (2) selon l'une des revendications précédentes,
dans lequel le système d'arme à laser (2) est agencé pour orienter un rayon utile (22) dans essentiellement un espace semi-infini; et/ou
dans lequel les propriétés dynamiques de la partie aérienne entièrement mobile (12b) de l'acquisition de cible ou, selon le cas de l'asservissement de cible de l'élément d'optique géométrique (10) du système d'arme à laser, présentent
une vitesse conseillée > 0,1 rad/s, en particulier > 0,5 rad/s, plus particulièrement > 1 rad/s, plus particulièrement > 1,5 rad/s, plus particulièrement 2 rad/s; et/ou
une accélération conseillée > 0,1 rad/s², en particulier > 0,5 rad/s², plus particulièrement > 1 rad/s², plus particulièrement > 1,5 rad/s², plus particulièrement 2 rad/s²; et/ou
une précision conseillée < 20 µrad, en particulier < 15µrad, plus particulièrement < 10 µrad, plus particulièrement < 5 µrad, plus particulièrement < 2 µrad.

8. Système d'arme à laser (2) selon l'une des revendications précédentes, dans lequel la liaison entre l'élément d'étage de sortie (8) et l'élément d'optique géométrique (10) s'effectue par l'utilisation d'une fibre optique (9) ou un rayon libre optique (9), la longueur de la fibre optique ou du rayon libre optique étant < 2,5 m, en particulier < 2 m, plus particulièrement < 1,5 m, plus particulièrement < 1 m, plus particulièrement < 0,5 m.

9. Système d'arme à laser (2) selon l'une des revendications précédentes 1 à 8, dans lequel la fibre optique (18) présente une longueur dans la plage allant jusqu'à 8 km, en particulier jusqu'à 7 km, plus particulièrement jusqu'à 6 km, plus particulièrement jusqu'à 5 km, plus particulièrement jusqu'à 4 km, plus particulièrement jusqu'à 3 km, plus particulièrement jusqu'à 2 km, plus particulièrement jusqu'à 1 km.
